# EUROPÄISCHE PATENTSCHRIFT

(11) **EP 2 900 715 B1**
(45) Veröffentlichungstag und Bekanntmachung des Hinweises auf die Patenterteilung: **25.11.2020**
(21) Anmeldenummer: 13762822.8
(22) Anmeldetag: 16.09.2013
(51) Int. Cl.: C08G 18/10, C08G 18/12, C08G 18/32

(54) **VERFAHREN ZUR HERSTELLUNG VON PORÖSEN MATERIALIEN AUF BASIS VON ISOCYANAT**
PROCESS FOR THE PREPARATION OF POROUS MATERIALS ON THE BASIS OF POLYURIC MATERIAL
PROCÉDÉ DE FABRICATION DE MATÉRIAUX POREUX À BASE DE POLYURÉE

(30) Priorität: 27.09.2012 EP 12186320
(43) Veröffentlichungstag der Anmeldung: 05.08.2015
(73) Patentinhaber: BASF SE, 67056 Ludwigshafen am Rhein (DE)
(72) Erfinder: FRICKE, Marc, 49090 Osnabrück (DE); ELBING, Mark, 28215 Bremen (DE)
(86) Internationale Anmeldenummer: PCT/EP2013/069089
(87) Internationale Veröffentlichungsnummer: WO 2014/048778

(56) Entgegenhaltungen:
- EP-A1- 2 399 945
- WO-A1-2012/059388

## Beschreibung

Die vorliegende Erfindung betrifft ein Verfahren zur Herstellung von porösen Materialien umfassend die Umsetzung mindestens eines mehrfunktionellen Isocyanates mit mindestens einem mehrfunktionellen aromatischen Amin in Gegenwart von mindestens einem Katalysator und einem Lösungsmittel. Weiterhin betrifft die Erfindung die so erhältlichen porösen Materialien sowie die Verwendung der porösen Materialien als Dämmstoff insbesondere für Anwendungen im Baubereich und in Vakuumisolationspaneelen.

Poröse Materialien, beispielsweise Polymerschäume, mit Poren im Größenbereich von wenigen Mikrometern oder deutlich darunter und einer hohen Porosität von mindestens 70 % sind aufgrund theoretischer Überlegungen besonders gute Wärmeisolatoren.

Solche porösen Materialien mit kleinem mittlerem Porendurchmesser können beispielsweise als organische Aerogele oder Xerogele vorliegen, die mit einem Sol-Gel-Verfahren und anschließender Trocknung hergestellt werden. Beim Sol-Gel-Verfahren wird zunächst ein Sol auf Basis einer reaktiven organischen Gelvorstufe hergestellt und danach das Sol durch eine vernetzende Reaktion zu einem Gel geliert. Um aus dem Gel ein poröses Material, beispielsweise ein Aerogel, zu erhalten, muss die Flüssigkeit entfernt werden. Dieser Schritt wird nachfolgend vereinfachend als Trocknung bezeichnet.

Die WO 2011/069959, die WO 2012/000917 und die WO 2012/059388 beschreiben poröse Materialien auf Basis von mehrfunktionellen Isocyanaten und mehrfunktionellen aromatischen Aminen, wobei die Aminkomponente mehrfunktionelle substituierte aromatische Amine umfasst. Die Herstellung der genannten porösen Materialien erfolgt durch Umsetzung von Isocyanaten mit der gewünschten Menge Amin in einem Lösungsmittel, das gegenüber den Isocyanaten nicht reaktiv ist. Die Verwendung von Katalysatoren ist dabei aus der WO 2012/000917 und der WO 2012/059388 bekannt. Allerdings offenbaren diese Schriften die Verwendung von Rezepturen mit üblichen, lediglich geringen Mengen an Katalysatoren.

Die Materialeigenschaften, insbesondere die mechanische Stabilität und/oder die Druckfestigkeit sowie die Wärmeleitfähigkeit, der bekannten porösen Materialien auf Basis von Polyharnstoff sind jedoch nicht für alle Anwendungen ausreichend. Insbesondere sind die thermischen Leitfähigkeiten im belüfteten Zustand noch nicht ausreichend niedrig. Der belüftete Zustand kennzeichnet bei offenzelligen Materialien den Zustand unter Umgebungsdruck mit Luft, wohingegen dieser Zustand bei teilweise oder ganz geschlossenzelligen Materialien wie Polyurethan-Hartschaumstoffen erst nach einer Alterung erreicht wird, nachdem das Zellgas nach und nach vollständig ausgetauscht wurde.

Ein besonderes Problem bei den aus dem Stand der Technik bekannten Formulierungen auf Basis von Isocyanaten und Aminen sind sogenannte Mischfehler. Mischfehler treten infolge der hohen Reaktionsgeschwindigkeit zwischen Isocyanaten und Aminogruppen auf, da vor einer vollständigen Durchmischung die Gelierungsreaktion bereits weit fortgeschritten ist. Mischfehler führen zu porösen Materialien mit heterogenen und unzureichenden Materialeigenschaften. Ein Konzept zur Verringerung des Phänomens der Mischfehler ist somit allgemein wünschenswert.

Es bestand daher die Aufgabe, die vorgenannten Nachteile zu vermeiden. Insbesondere sollte ein poröses Material zur Verfügung gestellt werden, das die vorgenannten Nachteile nicht oder in geringerem Maße aufweist. Die porösen Materialien sollten eine im Vergleich zum Stand der Technik verbesserte Wärmeleitfähigkeit bei niedrigen Drücken aufweisen. Insbesondere sollten die porösen Materialien jedoch im belüfteten Zustand, d. h. bei Umgebungsdruck, eine geringe thermische Leitfähigkeit aufweisen. Weiterhin sollte das poröse Material gleichzeitig eine hohe Porosität, eine geringe Dichte und eine ausreichend hohe mechanische Stabilität aufweisen.

Schließlich sollten Mischfehler und somit die Heterogenitäten in der Materialstruktur und den Materialeigenschaften in den porösen Materialien, welche bei der Umsetzung der Isocyanate mit den Aminen entstehen, vermieden werden.

Demgemäß wurden das erfindungsgemäße Verfahren und die so erhältlichen porösen Materialien gefunden. Die porösen Materialien der vorliegenden Erfindung sind vorzugsweise Aerogele oder Xerogele, insbesondere Aerogele.

Das erfindungsgemäße Verfahren zur Herstellung eines porösen Materials umfasst die Umsetzung der folgenden Komponenten:
(a1) von 40 bis 92,6 Gew.-% mindestens ein mehrfunktionelles Isocyanat, und
(a2) von 0,1 bis 30 Gew.-% mindestens ein mehrfunktionelles aromatisches Amin gemäß der allgemeinen Formel I 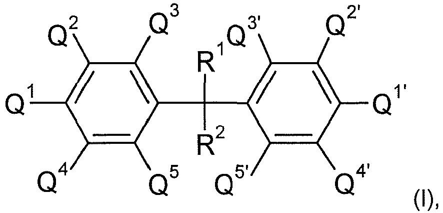 wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass die Verbindung gemäß der allgemeinen Formel I mindestens zwei primäre Aminogruppen umfasst, wobei zumindest eines aus Q¹, Q^{3'} und Q^{5'} eine primäre Aminogruppe ist,
(a3) von 0,5 bis 8 Gew.-% Wasser, und
(a4) von 6 bis 30 Gew.-% mindestens eines Katalysators,
jeweils bezogen auf das Gesamtgewicht der Komponenten (a1) bis (a4), wobei sich die Gew.-% der Komponenten (a1) bis (a4) auf 100 Gew.-% addieren, und wobei die Umsetzung in Gegenwart eines Lösungsmittels (C) durchgeführt wird, welches nach der Umsetzung entfernt wird.

Bevorzugte Ausführungsformen sind den Ansprüchen und der Beschreibung zu entnehmen. Kombinationen bevorzugter Ausführungsformen verlassen den Rahmen dieser Erfindung nicht. Nachfolgend werden bevorzugte Ausführungsformen der eingesetzten Komponenten erläutert.

Die mehrfunktionellen Isocyanate (a1) werden im Folgenden gemeinsam als Komponente (a1) bezeichnet. Entsprechend werden die mehrfunktionellen Amine (a2) im Folgenden gemeinsam als Komponente (a2) bezeichnet. Es ist für den Fachmann offensichtlich, dass die genannten Monomerkomponenten im porösen Material in umgesetzter Form vorliegen.

Unter Funktionalität einer Verbindung soll im Rahmen der vorliegenden Erfindung die Zahl der reaktiven Gruppen pro Molekül verstanden werden. Im Fall der Monomerkomponente (a1) ist die Funktionalität die Anzahl der Isocyanatgruppen pro Molekül. Im Falle der Aminogruppen der Monomerkomponente (a2) bezeichnet die Funktionalität die Zahl der reaktiven Aminogruppen pro Molekül. Eine mehrfunktionelle Verbindung weist dabei eine Funktionalität von mindestens 2 auf.

Falls als Komponente (a1) beziehungsweise (a2) Mischungen aus Verbindungen mit unterschiedlicher Funktionalität zum Einsatz kommen, ergibt sich die Funktionalität der Komponenten jeweils aus dem zahlengewichteten Mittel der Funktionalität der einzelnen Verbindungen. Eine mehrfunktionelle Verbindung enthält mindestens zwei der oben genannten funktionellen Gruppen pro Molekül.

Unter einem Xerogel wird ein poröses Material verstanden, welches durch ein Sol-Gel-Verfahren hergestellt wurde, wobei die flüssige Phase durch Trocknung unterhalb der kritischen Temperatur und unterhalb des kritischen Drucks der flüssigen Phase ("subkritische Bedingungen") aus dem Gel entfernt wurde. Unter Aerogel wird ein poröses Material verstanden, welches durch ein Sol-Gel-Verfahren hergestellt wurde, wobei die flüssige Phase unter überkritischen Bedingungen aus dem Gel entfernt wurde.

Erfindungsgemäß erfolgt die Umsetzung unter Verwendung von 40 bis 92,6 Gew.-% der Komponente (a1), von 0,1 bis 30 Gew.-%, bevorzugt von 0,2 bis 25 Gew.-%, insbesondere von 0,4 bis 23 Gew.-% der Komponente (a2), von 0,5 bis 8 Gew.-% Wasser und von 6 bis 30 Gew.-%, insbesondere von 7 bis 28 Gew.-% der Komponente (a4), jeweils bezogen auf das Gesamtgewicht der Komponenten (a1) bis (a4), wobei sich die Gew.-% der Komponenten (a1) bis (a4) auf 100 Gew.-% addieren.

Besonders bevorzugt erfolgt die Umsetzung unter Verwendung von 50 bis 92,5 Gew.-%, insbesondere von 57 bis 91,3 Gew.-% der Komponente (a1), von 0 bis 18 Gew.-%, insbesondere von 0,7 bis 16 Gew.-% der Komponente (a2), von 0,5 bis 8 Gew.-%, insbesondere von 0,5 bis 6 Gew.-% Wasser, und von 7 bis 24 Gew.-%, insbesondere von 8 bis 21 Gew.-% der Komponente (a4), jeweils bezogen auf das Gesamtgewicht der Komponenten (a1) bis (a4), wobei sich die Gew.-% der Komponenten (a1) bis (a4) auf 100 Gew.-% addieren.

Innerhalb der vorgenannten bevorzugten Bereiche sind die resultierenden Gel besonders stabil und schrumpfen im nachfolgenden Trocknungsschritt nicht oder nur geringfügig.

### Komponente (a1)

Im erfindungsgemäßen Verfahren wird als Komponente (a1) mindestens ein mehrfunktionelles Isocyanat umgesetzt.

Erfindungsgemäß beträgt die eingesetzte Menge der Komponente (a1) mindestens 40, besonders bevorzugt mindestens 45 Gew.-%, insbesondere mindestens 57 Gew.-% und die eingesetzte Menge der Komponente (a1) beträgt erfindungsgemäß höchstens 92,6 Gew.-%, besonders bevorzugt höchstens 92,5 Gew.%, insbesondere höchstens 91,3 Gew.-%, jeweils bezogen auf das Gesamtgewicht der Komponenten (a1) bis (a4).

Als mehrfunktionelle Isocyanate kommen aromatische, aliphatische, cycloaliphatische und/oder araliphatische Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente (a1) in diesem Fall verschiedene mehrfunktionelle Isocyanate enthält. Als Monomerbausteine (a1) in Betracht kommende mehrfunktionelle Isocyanate weisen zwei (im folgenden Diisocyanate genannt) oder mehr als zwei Isocyanatgruppen pro Molekül der Monomerkomponente auf.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophoron-diisocyanat, IPDI), 1,4- und/oder 1,3-Bis(iso-cyanatomethyl)cyclohexan

(HXDI), 1,4-Cyclohexandiisocyanat, 1-Methyl-2,4- und/oder -2,6-cyclohexandiisocyanat und 4,4'-, 2,4'- und/oder 2,2'-Dicyclohexylmethandiisocyanat.

Als mehrfunktionelle Isocyanate (a1) sind aromatische Isocyanate bevorzugt. Besonders bevorzugt sind als mehrfunktionelle Isocyanate der Komponente (a1) folgende Ausführungsformen:
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Als mehrfunktionelles Isocyanat besonders bevorzugt ist oligomeres Diphenylmethandiisocyanat. Bei oligomerem Diphenylmethandiisocyanat (im folgenden oligomeres MDI genannt) handelt es sich um ein oder ein Gemisch aus mehreren oligomeren Kondensationsprodukten und somit Derivaten von Diphenylmethandiisocyanat (MDI). Die mehrfunktionellen Isocyanate können bevorzugt auch aus Mischungen von monomeren aromatischen Diisocyanaten und oligomerem MDI aufgebaut sein.

Oligomeres MDI enthält ein oder mehrere mehrkernige Kondensationsprodukte des MDI mit einer Funktionalität von mehr als 2, insbesondere 3 oder 4 oder 5. Oligomeres MDI ist bekannt und wird häufig als Polyphenylpolymethylenisocyanat oder auch als polymeres MDI bezeichnet. Oligomeres MDI ist üblicherweise aus einer Mischung aus MDI-basierten Isocyanaten mit unterschiedlicher Funktionalität aufgebaut. Üblicherweise wird oligomeres MDI im Gemisch mit monomerem MDI eingesetzt.

Die (mittlere) Funktionalität eines Isocyanates, welches oligomeres MDI enthält, kann im Bereich von ungefähr 2,2 bis ungefähr 5 variieren, insbesondere von 2,4 bis 3,5, insbesondere von 2,5 bis 3. Eine solche Mischung von MDI-basierten mehrfunktionellen Isocyanaten mit unterschiedlichen Funktionalitäten ist insbesondere das Roh-MDI, das bei der Herstellung von MDI anfällt.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Vorzugsweise beträgt die Funktionalität der Komponente (a1) mindestens zwei, insbesondere mindestens 2,2 und besonders bevorzugt mindestens 2,5. Die Funktionalität der Komponente (a1) beträgt bevorzugt von 2,2 bis 4 und besonders bevorzugt von 2,5 bis 3.

Vorzugsweise beträgt der Gehalt an Isocyanatgruppen der Komponente (a1) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer bevorzugten Ausführungsform besteht die Komponente (a1) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente (a1) besonders bevorzugt oligomeres Diphenylmethandiisocyanat und weist eine Funktionalität von mindestens 2,5 auf.

Die Viskosität der eingesetzten Komponente (a1) kann in einem weiten Bereich variieren. Vorzugsweise weist die Komponente (a1) eine Viskosität von 100 bis 3000 mPa.s, besonders bevorzugt von 200 bis 2500 mPa.s, auf.

### Komponente (a2)

Erfindungsgemäß wird im Rahmen von Komponente (a2) mindestens ein mehrfunktionelles substituiertes aromatisches Amin (a2) gemäß der allgemeinen Formel I 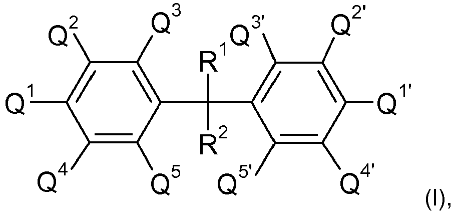 wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist, in Gegenwart eines Lösungsmittels (C) umgesetzt.

In einer bevorzugten Ausführungsform werden Q², Q⁴, Q^{2'} und Q^{4'} so gewählt, dass die Verbindung gemäß der allgemeinen Formel I mindestens eine lineare oder verzweigte Alkylgruppe, die weitere funktionelle Gruppen tragen kann, mit von 1 bis 12 Kohlenstoffatomen in α-Position zu mindestens einer an den aromatischen Kern gebundenen primären Aminogruppe aufweist. Komponente (a2) umfasst in diesem Fall mehrfunktionelle aromatische Amine (a2-s).

Unter mehrfunktionellen Aminen sind solche zu verstehen, welche mindestens zwei gegenüber Isocyanaten reaktive Aminogruppen pro Molekül aufweisen. Gegenüber Isocyanaten reaktiv sind dabei primäre und sekundäre Aminogruppen, wobei die Reaktivität der primären Aminogruppen im Allgemeinen deutlich höher ist als die der sekundären.

Vorzugsweise beträgt die eingesetzte Menge der Komponente (a2) mindestens 0,2, insbesondere mindestens 0,4, besonders bevorzugt mindestens 0,7 Gew.-%, insbesondere mindestens 1 Gew.-% und vorzugsweise beträgt die eingesetzte Menge der Komponente (a2) höchstens 25 Gew.-%, insbesondere höchstens 23 Gew.-%, besonders bevorzugt höchstens 20 Gew.-%, insbesondere höchstens 18 Gew.-%, jeweils bezogen auf das Gesamtgewicht der Komponenten (a1) bis (a4). In einer ganz besonders bevorzugten Ausführungsform beträgt die eingesetzte Menge der Komponente (a2) mindestens 5 und höchstens 20 Gew.-% bezogen auf das Gesamtgewicht der Komponenten (a1) bis (a4).

Erfindungsgemäß sind R¹ und R² im Rahmen der allgemeinen Formel I gleich oder unterschiedlich und werden unabhängig voneinander ausgewählt aus Wasserstoff, einer primären Aminogruppe und einer linearen oder verzweigten Alkylgruppe mit von 1 bis 6 Kohlenstoffatomen. Vorzugsweise werden R¹ und R² ausgewählt aus Wasserstoff und Methyl. Besonders bevorzugt gilt R¹ = R² = H.

In einer besonders bevorzugten Ausführungsform werden Q², Q⁴, Q^{2'} und Q^{4'} so gewählt, dass das substituierte aromatische Amin (a2-s) mindestens zwei primäre Aminogruppen umfasst, wobei sich jeweils eine oder zwei lineare oder verzweigte Alkylgruppen mit von 1 bis 12 Kohlenstoffatomen in α-Position zu den am aromatischen Kern gebundenen primären Aminogruppen befindet, wobei die Alkylgruppen optional weitere funktionelle Gruppen tragen können. Sofern eines oder mehrere aus Q2, Q⁴, Q^{2'} und Q^{4'} so gewählt werden, dass sie lineare oder verzweigte Alkylgruppen mit von 1 bis 12 Kohlenstoffatomen entsprechen, die weitere funktionelle Gruppen tragen, dann sind Aminogrupppen und/oder Hydroxygruppen und/oder Halogenatome als solche funktionelle Gruppen bevorzugt.

Die durch die vorgenannten Alkylgruppen in α-Position hervorgerufene verringerte Reaktivität führt in Kombination mit Einsatz der unten näher ausgeführten Komponente (a4) zu besonders stabilen Gelen mit besonders guten Wärmeleitfähigkeiten im belüfteten Zustand. Vorzugsweise werden die Alkylgruppen im Rahmen der Substituenten Q gemäß der allgemeinen Formel I ausgewählt aus Methyl, Ethyl, n-Propyl, iso-Propyl, n-Butyl, sek-Butyl und tert-Butyl.

Vorzugsweise werden die Amine (a2-s) ausgewählt aus der Gruppe bestehend aus 3,3',5,5'-Tetraalkyl-4,4'-diaminodiphenylmethan, 3,3',5,5'-Tetraalkyl-2,2'-diaminodiphenylmethan und 3,3',5,5'-Tetraalkyl-2,4'-diaminodiphenylmethan, wobei die Alkylgruppen in 3,3',5 und 5'-Position gleich oder unterschiedlich sein können und unabhängig voneinander ausgewählt werden aus linearen oder verzweigten Alkylgruppen mit von 1 bis 12 Kohlenstoffatomen, die weitere funktionelle Gruppen tragen können. Vorzugsweise sind vorgenannte Alkylgruppen Methyl, Ethyl, n-Propyl, i-Propyl, n-Butyl, sek-Butyl oder t-Butyl (jeweils unsubstituiert).

In einer Ausführungsform können eines, mehrere oder alle Wasserstoffatome einer oder mehrerer Alkylgruppen der Substituenten Q durch Halogenatome, insbesondere Chlor, ersetzt sein. Alternativ können eines, mehrere oder alle Wasserstoffatome einer oder mehrerer Alkylgruppen der Substituenten Q durch NH₂ oder OH ersetzt sein. Es ist jedoch bevorzugt, wenn die Alkylgruppen im Rahmen der allgemeinen Formel I aus Kohlenstoff und Wasserstoff aufgebaut sind.

In einer besonders bevorzugten Ausführungsform umfasst Komponente (a2) 3,3',5,5'-Tetraalkyl-4,4'-diaminodiphenylmethan, wobei die Alkylgruppen gleich oder unterschiedlich sein können und unabhängig ausgewählt werden aus linearen oder verzweigten Alkylgruppen mit von 1 bis 12 Kohlenstoffatomen, die optional funktionelle Gruppen tragen können. Vorzugsweise werden vorgenannte Alkylgruppen ausgewählt aus unsubstituierten Alkylgruppen, insbesondere Methyl, Ethyl, n-Propyl, iso-Propyl, n-Butyl, sek-Butyl und tert-Butyl, besonders bevorzugt aus Methyl und Ethyl. Ganz besonders bevorzugt sind 3,3'-5,5'-Tetraethyl-4,4'-diaminodiphenylmethan und/oder 3,3'-5,5'-Tetramethyl-4,4'-diaminodiphenylmethan.

Die vorgenannten mehrfunktionellen Amine des Typs (a2-s) sind dem Fachmann an sich bekannt oder können nach bekannten Methoden hergestellt werden. Eine der bekannten Methoden ist die Umsetzung von Anilin beziehungsweise von Derivaten des Anilins mit Formaldehyd unter saurer Katalyse, insbesondere die Umsetzung von 2,4-oder 2,6-Dialkylanilin.

Optional kann die Komponente (a2) auch mehrfunktionelle aromatische Amine (a2-u) umfassen, welche sich von den Aminen der Struktur (a2-s) unterscheiden. Die aromatischen Amine (a2-u) weisen vorzugsweise ausschließlich aromatisch gebundene Aminogruppen auf, können jedoch auch sowohl (cyclo)aliphatisch als auch aromatisch gebundene reaktive Aminogruppen aufweisen.

Geeignete mehrfunktionelle aromatische Amine (a2-u) sind insbesondere Isomere und Derivate von Diaminodiphenylmethan. Im Rahmen von Komponente (a2) bevorzugte Isomere und Derivate von Diaminodiphenylmethan sind insbesondere 4,4'-Diaminodiphenylmethan, 2,4'-Diaminodiphenylmethan, 2,2'-Diaminodiphenylmethan und oligomeres Diaminodiphenylmethan.

Geeignete mehrfunktionelle aromatische Amine (a2-u) sind außerdem insbesondere Isomere und Derivate von Toluoldiamin. Im Rahmen von Komponente (a2) bevorzugte Isomere und Derivate von Toluoldiamin sind insbesondere Toluol-2,4-diamin und/oder Toluol-2,6-diamin und Diethyltoluoldiamine, insbesondere 3,5-Diethyltoluol-2,4-diamin und/oder 3,5-Diethyltoluol-2,6-diamin.

In einer ersten, besonders bevorzugten Ausführungsform besteht Komponente (a2) ausschließlich aus mehrfunktionellen aromatischen Aminen des Typs (a2-s). In einer zweiten bevorzugten Ausführungsform besteht Komponente (a2) aus mehrfunktionellen aromatischen Aminen der Typen (a2-s) und (a2-u). Im Rahmen der letztgenannten, zweiten bevorzugten Ausführungsform enthält die Komponente (a2) vorzugsweise mindestens ein mehrfunktionelles aromatisches Amin (a2-u), wovon mindestens eines ausgewählt ist aus Isomeren und Derivaten von Diaminodiphenylmethan (MDA).

Besonders bevorzugt umfasst Komponente (a2) im Rahmen der zweiten bevorzugten Ausführungsform entsprechend mindestens ein mehrfunktionelles aromatisches Amin (a2-u) ausgewählt aus 4,4'-Diaminodiphenylmethan, 2,4'-Diaminodiphenylmethan, 2,2'-Diaminodiphenylmethan und oligomerem Diaminodiphenylmethan.

Oligomeres Diaminodiphenylmethan enthält ein oder mehrere mehrkernige Methylen-verbrückte Kondensationsprodukte von Anilin und Formaldehyd. Oligomeres MDA enthält mindestens ein, im Allgemeinen jedoch mehrere Oligomere des MDA mit einer Funktionalität von mehr als 2, insbesondere 3 oder 4 oder 5. Oligomeres MDA ist bekannt oder kann nach an sich bekannten Methoden hergestellt werden. Üblicherweise wird oligomeres MDA in Form von Mischungen mit monomerem MDA eingesetzt.

Die (mittlere) Funktionalität eines mehrfunktionellen Amins (a2-u), welches oligomeres MDA enthält, kann im Bereich von ungefähr 2,3 bis ungefähr 5 variieren, insbesondere von 2,3 bis 3,5 und insbesondere von 2,3 bis 3. Eine solche Mischung von MDA-basierten mehrfunktionellen Aminen mit unterschiedlichen Funktionalitäten ist insbesondere das Roh-MDA, das insbesondere bei der Kondensation von Anilin mit Formaldehyd, üblicherweise katalysiert durch Salzsäure, als Zwischenprodukt der Herstellung von Roh-MDI entsteht.

Im Rahmen der genannten bevorzugten zweiten Ausführungsform ist besonders bevorzugt, wenn die Komponente (a2) oligomeres Diaminodiphenylmethan als Verbindung (a2-u) enthält und insgesamt eine Funktionalität von mindestens 2,1 aufweist.

Der Anteil der Amine des Typs (a2-s) gemäß der allgemeinen Formel I am Gesamtgewicht aller mehrfunktionellen Amine der Komponente (a2), die somit insgesamt 100 Gew.-% ergeben, beträgt vorzugsweise von 10 bis 100 Gew.-%, insbesondere von 30 bis 100 Gew.-%, ganz besonders bevorzugt von 50 bis 100 Gew.-%, insbesondere von 80 bis 100 Gew.-%.

Der Anteil der mehrfunktionellen aromatischen Amine (a2-u), die sich von den Aminen des Typs (a2-s) unterscheiden, am Gesamtgewicht aller mehrfunktionellen Amine der Komponente (a2) beträgt vorzugsweise von 0 bis 90 Gew.-%, insbesondere von 0 bis 70 Gew.-%, besonders bevorzugt von 0 bis 50 Gew.-%, insbesondere von 0 bis 20 Gew.-%.

### Komponente a3

Komponente (a3) ist Wasser. Die erfindungsgemäß eingesetzte Menge Wasser beträgt mindestens 0,5 Gew.-%, insbesondere mindestens 1 Gew.-% und höchstens 8 Gew.-%, jeweils bezogen auf das Gesamtgewicht der Komponenten (a1) bis (a4), welches 100 Gew.-% ergibt.

Aus dem Wassergehalt und dem Gehalt reaktiver Isocyanatgruppen der Komponente (a1) ergibt sich ein rechnerischer Gehalt an Aminogruppen, indem man von einer vollständigen Umsetzung des Wassers mit den Isocyanatgruppen der Komponente (a1) unter Bildung einer entsprechenden Menge Aminogruppen ausgeht und diesen Gehalt zum Gehalt resultierend aus Komponente (a2) addiert (insgesamt n^{Amin}). Das hieraus resultierende Einsatzverhältnis der rechnerisch verbleibenden NCO-Gruppen n^{NCO} im Verhältnis zu den rechnerisch gebildeten sowie eingesetzten Aminogruppen wird nachfolgend als rechnerisches Einsatz-Verhältnis n^{NCO}/n^{Amin} bezeichnet und ist ein Äquivalenzverhältnis, d. h. ein molares Verhältnis der jeweiligen funktionellen Gruppen.

Wasser reagiert mit den Isocyanatgruppen zu Aminogruppen unter Freisetzung von CO₂. Somit werden mehrfunktionelle Amine teilweise als Zwischenprodukt (in situ) erzeugt. Sie werden im weiteren Verlauf der Umsetzung mit Isocyanatgruppen zu Harnstoffverknüpfungen umgesetzt. Die Erzeugung von Aminen als Zwischenprodukt führt zu porösen Materialien mit besonders hoher mechanischer Stabilität und geringer Wärmeleitfähigkeit. Das gebildete CO₂ darf die Gelierung jedoch nicht so stark stören, dass die Struktur des resultierenden porösen Materials in unerwünschter Weise beeinflusst wird. Hieraus ergeben sich die oben ausgeführte bevorzugten Obergrenzen für den Wassergehalt bezogen auf das Gesamtgewicht der Komponenten (a1) bis (a4).

Dabei beträgt das rechnerische Einsatz-Verhältnis (Äquivalenzverhältnis) n^{NCO}/n^{Amin} bevorzugt von 1,01 bis 5. Besonders bevorzugt beträgt das genannte Äquivalenzverhältnis von 1,1 bis 3, insbesondere von 1,1 bis 2. Ein Überschuss n^{NCO} gegenüber n^{Amin} führt in dieser Ausführungsform zu einer geringeren Schrumpfung des porösen Materials, insbesondere Xerogel, bei der Entfernung des Lösungsmittels sowie durch synergistische Zusammenwirkung mit dem Katalysator (a4) zu einer verbesserten Netzwerkstruktur und zu verbesserten Endeigenschaften des resultierenden porösen Materials.

Die Komponenten (a1) bis (a4) werden nachfolgend gemeinsam als organische Gelvorstufe (A) bezeichnet. Es ist für den Fachmann offensichtlich, dass die teilweise Umsetzung der Komponente (a1) bis (a4) zu der eigentlichen Gelvorstufe (A) führt, welche anschließend zu einem Gel umgesetzt wird.

### Katalysator (a4)

Erfindungsgemäß beträgt die eingesetzte Menge der Komponente (a4) mindestens 6, insbesondere mindestens 7, besonders bevorzugt mindestens 8 Gew.-%, insbesondere mindestens 9 Gew.-% und die eingesetzte Menge der Komponente (a4) beträgt höchstens 30 Gew.-%, insbesondere höchstens 28 Gew.-%, besonders bevorzugt höchstens 24 Gew.-%, insbesondere höchstens 21 Gew.-%, jeweils bezogen auf das Gesamtgewicht der Komponenten (a1) bis (a4).

Als Katalysatoren kommen im Prinzip alle dem Fachmann bekannten Katalysatoren in Betracht, welche die Trimerisierung von Isocyanaten (sogenannte Trimerisierungskatalysatoren) und/oder die Umsetzung von Isocyanaten mit Aminogruppen (sogenannte Gelkatalysatoren) und/oder die Umsetzung von Isocyanaten mit Wasser (sogenannte Treibkatalysatoren) beschleunigen.

Die entsprechenden Katalysatoren sind an sich bekannt und weisen unterschiedliche Ausprägungen hinsichtlich der oben genannten drei Reaktionen auf. Je nach Ausprägung können sie somit ein oder mehrerer der vorgenannten Typen zugeordnet werden. Dem Fachmann ist darüber hinaus bekannt, dass auch andere Reaktionen als die oben genannten auftreten können.

Entsprechende Katalysatoren lassen sich unter anderem anhand ihres Gel- zu Treibverhältnisses charakterisieren, wie z.B. bekannt aus Polyurethane, 3. Auflage, G. Oertel, Hanser Verlag, München, 1993.

Bevorzugte Katalysatoren (a4) weisen ein ausgewogenes Gel- zu Treibverhältnis auf, so dass die Reaktion der Komponente (a1) mit Wasser nicht zu stark beschleunigt wird und zu einer negativen Beeinflussung der Netzwerkstruktur führt und gleichzeitig eine kurze Gelierungszeit resultiert, so dass die Entformungszeit vorteilhaft gering ist. Bevorzugte Katalysatoren weisen gleichzeitig eine signifikante Aktivität hinsichtlich der Trimerisierung auf. Hierdurch wird die Homogenität der Netzwerkstruktur günstig beeinflusst, woraus besonders günstige mechanische Eigenschaften resultieren.

Die Katalysatoren können ein Monomerbaustein (einbaubarer Katalysator) oder nicht-einbaubar sein.

Im Rahmen von Komponente (a4) geeignete Katalysatoren werden insbesondere ausgewählt aus der Gruppe bestehend aus primären, sekundären und tertiären Aminen, Triazinderivaten, Organometallverbindungen, Metallchelaten, phosphororganischen Verbindungen, insbesondere Oxide der Phospholene, quaternären Ammoniumsalzen, Ammoniumhydroxiden, Alkali- und Erdalkali-Hydroxiden, Alkali- und Erdalkali-Alkoxiden sowie Ammmonium- und Metallsalzen von Carbonsäuren.

Geeignete phosphororganische Verbindungen, insbesondere Oxide der Phospholene sind z.B. 1-Methylphospholenoxid,3-Methyl-1-phenylphosphlenoxid, 1-Phenylphospholenoxid, 3-Methyl-1-benzylphospholenoxid,

Die geeigneten Katalysatoren sind bevorzugt Trimerisierungskatalysatoren. Geeignete Trimerisierungskatalysatoren sind insbesondere starke Basen, beispielsweise quaternäre Ammoniumhydroxide, wie z. B. Tetraalkylammoniumhydroxide mit 1 bis 4 C-Atomen im Alkylrest und Benzyltrimethylammoniumhydroxid, Alkalimetallhydroxide, wie z. B. Kalium- oder Natriumhydroxid und Alkalimetallalkoxide, wie z. B. Natriummethylat, Kalium- und Natriumethylat und Kaliumisopropylat.

Geeignete Trimerisierungskatalysatoren sind außerdem insbesondere die weiter unten beschriebenen Ammonium- und Metallsalze von Carbonsäuren sowie N-Hydroxyalkyl-quarternärammoniumcarboxylate, wie z.B. Trimethylhydroxypropylammoniumformiat.

Tertiäre Amine sind dem Fachmann ebenfalls als Trimerisierungskatalysatoren an sich bekannt. Tertiäre Amine, d. h. Verbindungen mit mindestens einer tertiären Aminogruppe, sind als Katalysatoren (a4) besonders bevorzugt. Geeignete tertiäre Amine mit ausgeprägten Eigenschaften als Trimerisierungskatalysatoren sind insbesondere N,N',N"-Tris-(dialkylaminoalkyl)-s-hexahydrotriazine, wie z. B. N,N',N"-Tris(dimethylaminopropyl)-s-hexahydrotriazin, Trisdimethylaminomethyl)phenol.

Organometallverbindungen sind dem Fachmann als Gelkatalysatoren an sich bekannt. Organozinnverbindungen wie z.B. Zinn-2-ethylhexanoate und Dibutylzinndilaurate sind besonders bevorzugt.

Tertiäre Amine sind dem Fachmann außerdem als Gelkatalysator an sich bekannt. Wie bereits erwähnt, sind tertiäre Amine als Katalysatoren (a4) besonders bevorzugt. Geeignete tertiäre Amine mit guten Eigenschaften als Gelkatalysatoren sind insbesondere N,N-Dimethylbenzylamin, N,N'-Dimethylpiperazin und N,N-Dimethylcyclohexylamin sowie Dimethylcyclohexylamin, Bis(2-dimethylaminoethyl)ether, N,N,N,N,N-Pentamethyldiethylentriamin, Methylimidazol, Dimethylimidazol, Aminopropylimidazol, Dimethylbenzylamin, 1,6-Diazabicyclo-5,4,0-undecen-7, Triethylamin, Triethylendiamin (1,4-Diazabicyclo[2,2,2]octan), Dimethylaminoethanolamin, Dimethylaminopropylamin, N,N-Dimethylaminoethoxyethanol, N,N,N-Trimethylaminoethylethanolamin, Triethanolamin, Diethanolamin, Triisopropanolamin, Diisopropanolamin, Methyldiethanolamin und Butyldiethanolamin.

Im Rahmen von Komponente (a4) besonders bevorzugte Katalysatoren werden ausgewählt aus der Gruppe bestehend aus Dimethylcyclohexylamin, Dimethylpiperazin, Bis(2-dimethylaminoethyl)ether, N,N,N,N,N-Pentamethyldiethylentriamin, Methylimidazol, Dimethylimidazol, Aminopropylimidazol, Dimethylbenzylamin, 1,6-Diazabicyclo-5,4,0-undecen-7, Tris-dimethylaminopropylhexahydrotriazin, Triethylamin, Tris-(dimethylaminomethyl)phenol, Triethylendiamin (Diazabicyclo[2,2,2]octan), Dimethylaminoethanolamin, Dimethylaminopropylamin, N,N-Dimethylaminoethoxyethanol, N,N,N-Trimethylaminoethylethanolamin, Triethanolamin, Diethanolamin, Triisopropanolamin, Diisopropanolamin, Methyldiethanolamin, Butyldiethanolamin, Metall-Acetylacetonate, Ammonium-Ethylhexanoate und Metallionen-Ethylhexanoate. Ganz besonders bevorzugt sind Dimethylcyclohexylamin, Dimethylpiperazin, Methylimidazol, Dimethylimidazol, Dimethylbenzylamin, 1,6-Diazabicyclo-5,4,0-undecen-7, Tris-dimethylaminopropylhexahydrotriazin, Triethylamin, Tris-(dimethylaminomethyl)phenol, Triethylendiamin (Diazabicyclo[2,2,2]octan), Dimethylaminoethanolamin, Dimethylaminopropylamin, N,N,N-Trimethylaminoethylethanolamin, Triethanolamin, Diethanolamin, Methyldiethanolamin, Butyldiethanolamin, Ammonium-Ethylhexanoate und Metallionen-Ethylhexanoate.

Ganz besonders bevorzugt werden als Katalysator außerdem Carboxylate eingesetzt. Bevorzugte Carboxylate weisen als Kation ein Alkali-, Erdalkali- oder Ammoniuimion auf, d.h. sie sind entsprechende Salze von Carbonsäuren. Bevorzugte Carboxylate sind Formiate, Acetate, 2-Ethylhexanoate, Trifluoracetate, Adipate, Benzoate und gesättigte oder ungesättigte langkettige Fettsäuresalze mit von 10 bis 20 Kohlenstoffatomen, die gegebenenfalls an der Seitengruppe OH-Gruppen aufweisen.

Ganz besonders bevorzugte Katalysatoren werden ausgewählt aus Kaliumformiat, Natriumacetat, Kaliumacetat, Cäsiumacetat, Kalium-2-ethylhexanoat, Kaliumtrifluoroacetat, Kaliumadipat, Natriumbenzoat, und Alkalimetallsalze von gesättigten oder ungesättigten langkettigen Fettsäuresalzen mit von 10 bis 20 Kohlenstoffatomen, die gegebenenfalls an der Seitengruppe OH-Gruppen aufweisen.

Gemäß der vorliegenden Erfindung findet die Umsetzung in Gegenwart eines Lösungsmittels (C) statt.

Der Begriff Lösungsmittel (C) umfasst im Rahmen der vorliegenden Erfindung flüssige Verdünnungsmittel, das heißt sowohl Lösungsmittel im engeren Sinne als auch Dispersionsmittel. Die Mischung kann insbesondere eine echte Lösung, eine kolloidale Lösung oder eine Dispersion, z.B. eine Emulsion oder Suspension, sein. Bevorzugt ist die Mischung eine echte Lösung. Das Lösungsmittel (C) ist eine unter den Bedingungen des Schrittes (a) flüssige Verbindung, vorzugsweise ein organisches Lösungsmittel.

Als Lösungsmittel (C) kommen prinzipiell eine organische Verbindung oder ein Gemisch aus mehreren Verbindungen in Betracht, wobei das Lösungsmittel (C) bei den Temperatur- und Druckbedingungen, unter denen die Mischung in Schritt (a) bereitgestellt wird (kurz: Lösungsbedingungen), flüssig ist. Die Zusammensetzung des Lösungsmittels (C) wird so gewählt, dass es in der Lage ist, die organische Gelvorstufe zu lösen oder zu dispergieren, bevorzugt zu lösen. Bevorzugte Lösungsmittel (C) sind solche, die ein Lösungsmittel für die organische Gelvorstufe (A) sind, d. h. solche, die die organische Gelvorstufe (A) unter Reaktionsbedingungen vollständig lösen.

Das Reaktionsprodukt der Umsetzung in Gegenwart des Lösungsmittels (C) ist zunächst ein Gel, d. h. ein viskoelastisches chemisches Netzwerk, das durch das Lösungsmittel (C) gequollen ist. Ein Lösungsmittel (C), welches ein gutes Quellmittel für das in Schritt (b) gebildete Netzwerk darstellt, führt in der Regel zu einem Netzwerk mit feinen Poren und kleinem mittleren Porendurchmesser, wohingegen ein Lösungsmittel (C), welches ein schlechtes Quellmittel für das aus Schritt (b) resultierende Gel darstellt, in der Regel zu einem grobporigen Netzwerk mit großem mittleren Porendurchmesser führt.

Die Wahl des Lösungsmittels (C) beeinflusst somit die angestrebte Porengrößenverteilung und die angestrebte Porosität. Die Wahl des Lösungsmittels (C) erfolgt im Allgemeinen zudem so, dass ein Ausfällen oder Ausflocken durch Bildung eines präzipitierten Reaktionsproduktes während oder nach Schritt (b) des erfindungsgemäßen Verfahrens weitestgehend nicht auftritt.

Bei Wahl eines geeigneten Lösungsmittels (C) ist der Anteil an präzipitiertem Reaktionsprodukt üblicherweise kleiner als 1 Gew.-%, bezogen auf das Gesamtgewicht der Mischung. Die Menge an gebildetem präzipitiertem Produkt in einem bestimmten Lösungsmittel (C) kann gravimetrisch bestimmt werden, indem die Reaktionsmischung vor dem Gelpunkt über ein geeignetes Filter filtriert wird.

Als Lösungsmittel (C) kommen die aus dem Stand der Technik bekannten Lösungsmittel für Isocyanat-basierte Polymere in Frage. Bevorzugte Lösungsmittel sind dabei solche, die ein Lösungsmittel für die Komponenten (a1) bis (a4) sind, d. h. solche, die die Bestandteile der Komponenten (a1) bis (a4) unter Reaktionsbedingungen weitgehend vollständig lösen. Bevorzugt ist das Lösungsmittel (C) gegenüber Komponente (a1) inert, d. h. nicht reaktiv.

Als Lösungsmittel (C) kommen beispielsweise Ketone, Aldehyde, Alkylalkanoate, Amide wie Formamid und N-Methylpyrollidon, Sulfoxide wie Dimethylsulfoxid, aliphatische und cycloaliphatische halogenierte Kohlenwasserstoffe, halogenierte aromatische Verbindungen und fluorhaltige Ether in Betracht. Ebenso in Betracht kommen Mischungen aus zwei oder mehreren der vorgenannten Verbindungen.

Weiterhin kommen Acetale, insbesondere Diethoxymethan, Dimethoxymethan und 1,3-Dioxolan, als Lösungsmittel (C) in Betracht.

Dialkylether und zyklische Ether sind als Lösungsmittel (C) ebenfalls geeignet. Bevorzugte Dialkylether sind insbesondere solche mit 2 bis 6 Kohlenstoffatomen, insbesondere Methyl-Ethylether, Diethylether, Methyl-Propylether, Methyl-Isopropylether, Propyl-Ethylether, Ethyl-Isopropylether, Dipropylether, Propyl-Isopropylether, Diisopropylether, Methyl-Butylether, Methyl-Isobutylether, Methyl-t-Butylether, Ethyl-n-Butylether, Ethyl-Isobutylether und Ethyl-t-Butylether. Bevorzugte zyklische Ether sind insbesondere Tetrahydrofuran, Dioxan und Tetrahydropyran.

Aldehyde und/oder Ketone sind als Lösungsmittel (C) besonders bevorzugt. Als Lösungsmittel (C) geeignete Aldehyde oder Ketone sind insbesondere solche entsprechend der allgemeinen Formel R²-(CO)-R¹, wobei R¹ und R² Wasserstoff oder Alkylgruppen mit 1,2,3 oder 4 Kohlenstoffatomen sind. Geeignete Aldehyde oder Ketone sind insbesondere Acetaldehyd, Propionaldehyd, n-Butyraldehyd, Isobutyraldehyd, 2-Ethylbutyraldehyd, Valeraldehyd, Isopentaldehyd, 2-Methylpentaldehyd, 2-Ethylhexaldehyde, Acrolein, Methacrolein, Crotonaldehyd, Furfural, Acroleindimer, Methacroelindimer, 1,2,3,6-Tetrahydrobenzaldehyd, 6-Methyl-3-cyclohexenaldehyd, Cyanacetaldehyd, Glyoxynsäureethylester, Benzaldehyd, Aceton, Methylisobutylketon, Diethylketon, Methylethylketon, Methylisobutylketon, Methyl-n-butylketon, Ethylisopropylketon, 2-Acetylfuran, 2-Methoxy-4-methylpentan-2-on, Cyclohexanon und Acetophenon. Die vorgenannten Aldehyde und Ketone können auch in Form von Mischungen eingesetzt werden. Ketone und Aldehyde mit Alkylgruppen mit bis zu 3 Kohlenstoffatomen pro Substituent sind als Lösungsmittel (C) bevorzugt. Besonders bevorzugt Methylethylketon.

Als Lösungsmittel sind außerdem Alkylalkanoate bevorzugt, insbesondere Methylformiat, Methylacetat, Ethylformiat, Butylacetat, Ethylacetat und Ethylacetoacetat. Besonders bevorzugt ist Ethylacetat. Bevorzugte halogenierte Lösungsmittel sind in der WO 00/24799, Seite 4, Zeile 12 bis Seite 5, Zeile 4 beschrieben.

In vielen Fällen ergeben sich besonders geeignete Lösungsmittel (C), indem man zwei oder mehrere miteinander vollständig mischbare Verbindungen, ausgewählt aus den vorgenannten Lösungsmitteln, in Form eines Gemisches einsetzt.

Um in Schritt (b) ein ausreichend stabiles Gel zu erhalten, das bei der Trocknung in Schritt (c) nicht stark schrumpft, darf der Anteil der Komponenten (a1) bis (a4) am Gesamtgewicht der Komponenten (a1) bis (a4) und dem Lösungsmittel (C), welches 100 Gew.-% ergibt, im Allgemeinen nicht weniger als 5 Gew.-% betragen. Bevorzugt beträgt der Anteil der Komponenten (a1) bis (a4) am Gesamtgewicht der Komponenten (a1) bis (a4) und dem Lösungsmittel (C), welches 100 Gew.-% ergibt, mindestens 6 Gew.-%, besonders bevorzugt mindestens 8 Gew.-%, insbesondere mindestens 10 Gew.-%.

Andererseits darf die Konzentration der Komponenten (a1) bis (a4) in der bereitgestellten Mischung nicht zu hoch gewählt werden, da ansonsten kein poröses Material mit günstigen Eigenschaften erhalten wird. Im Allgemeinen beträgt der Anteil der Komponenten (a1) bis (a4) am Gesamtgewicht der Komponenten (a1) bis (a4) und dem Lösungsmittel (C), welches 100 Gew.-% ergibt, höchstens 40 Gew.-%. Bevorzugt beträgt der Anteil der Komponenten (a1) bis (a4) am Gesamtgewicht der Komponenten (a1) bis (a4) und dem Lösungsmittel (C), welches 100 Gew.-% ergibt, höchstens 35 Gew.-%, besonders bevorzugt höchstens 25 Gew.-%, insbesondere höchstens 20 Gew.-%.

Vorzugsweise beträgt der Gewichtsanteil der Komponenten (a1) bis (a4) am Gesamtgewicht der Komponenten (a1) bis (a4) und des Lösungsmittels (L), welches 100 Gew.-% ergibt, insgesamt von 8 bis 25 Gew.-%, insbesondere von 10 bis 20 Gew.-%, besonders bevorzugt von 12 bis 18 Gew.-%. Die Einhaltung der Menge der Einsatzstoffe im genannten Bereich führt zu porösen Materialien mit besonders günstiger Porenstruktur, geringer Wärmeleitfähigkeit und geringer Schrumpfung bei der Trocknung.

Vor der Umsetzung ist es erforderlich, die eingesetzten Komponenten zu mischen, insbesondere homogen zu vermischen. Die Geschwindigkeit des Mischens sollte groß relativ zur Geschwindigkeit der Umsetzung sein, um Mischfehler zu vermeiden. Entsprechende Mischverfahren sind dem Fachmann an sich bekannt.

### Bevorzugtes Verfahren zur Herstellung der porösen Materialien

Im Rahmen einer bevorzugten Ausführungsform umfasst das erfindungsgemäße Verfahren zumindest folgende Schritte:
(a) Bereitstellen der Komponenten (a1) bis (a4) und des Lösungsmittels (C) wie oben erläutert,
(b) Umsetzung der Komponenten (a1) bis (a4) in Gegenwart des Lösungsmittels (C) zu einem Gel, und
(c) Trocknen des im vorigen Schritt erhaltenen Gels.

Bevorzugte Ausführungsformen der Schritte (a) bis (c) werden im Folgenden näher beschreiben.

### Schritt (a)

Erfindungsgemäß erfolgt in Schritt (a) das Bereitstellen der Komponenten (a1) bis (a4) und des Lösungsmittels (C).

Vorzugsweise werden die Komponenten (a1) einerseits und (a2) andererseits getrennt voneinander jeweils in einer geeigneten Teilmenge des Lösungsmittels (C) bereitgestellt. Die getrennte Bereitstellung ermöglicht die optimale Kontrolle beziehungsweise Steuerung der Gelierungsreaktion vor und während des Vermischens.

Besonders bevorzugt wird Komponente (a3) und (a4) als Mischung mit Komponente (a2), d. h. getrennt von Komponente (a1), bereitgestellt. Dies vermeidet die Reaktion von Wasser oder der Komponente (a4) mit Komponente (a1) unter Bildung von Netzwerken ohne Anwesenheit der Komponente (a2). Andernfalls führt die Vorabmischung von Wasser mit Komponente (a1) zu weniger günstigen Eigenschaften in Bezug auf die Homogenität der Porenstruktur und die Wärmeleitfähigkeit der resultieren Materialien.

Die in Schritt (a) bereitgestellte Mischung oder Mischungen können außerdem übliche, dem Fachmann bekannte Hilfsmittel als weitere Bestandteile enthalten. Genannt seien beispielsweise oberflächenaktive Substanzen, Flammschutzmittel, Keimbildungsmittel, Oxidationsstabilisatoren, Gleit- und Entformungshilfen, Farbstoffe und Pigmente, Stabilisatoren, z.B. gegen Hydrolyse, Licht, Hitze oder Verfärbung, anorganische und/oder organische Füllstoffe, IR-Trübungsmittel, Verstärkungsmittel und Biozide.

Nähere Angaben über die oben genannten Hilfsmittel- und Zusatzstoffe sind der Fachliteratur zu entnehmen, z.B. aus Plastics Additive Handbook, 5th edition, H. Zweifel, ed. Hanser Publishers, München, 2001.

### Schritt (b)

Erfindungsgemäß erfolgt in Schritt (b) die Umsetzung der Komponenten (a1) bis (a4) in Gegenwart des Lösungsmittels (C) zu einem Gel. Um die Umsetzung durchzuführen, muss zunächst eine homogene Mischung der in Schritt (a) bereitgestellten Komponenten erzeugt werden.

Das Bereitstellen der im Rahmen von Schritt (a) bereitgestellten Komponenten kann auf übliche Weise erfolgen. Bevorzugt wird dazu ein Rührer oder eine andere Mischvorrichtung eingesetzt, um eine gute und schnelle Durchmischung zu erzielen. Die zur Erzeugung der homogenen Mischung benötigte Zeitdauer sollte klein im Verhältnis zur der Zeitdauer sein, in der die Gelierungsreaktion zu der zumindest teilweisen Ausbildung eines Gels führt, um Mischfehler zu vermeiden. Die sonstigen Mischbedingungen sind in der Regel nicht kritisch, beispielsweise kann man bei 0 bis 100°C und 0,1 bis 10 bar (absolut), insbesondere z.B. bei Raumtemperatur und Atmosphärendruck, mischen. Nach erfolgter Erzeugung einer homogenen Mischung wird die Mischapparatur vorzugsweise abgeschaltet.

Bei der Gelierungsreaktion handelt es sich um eine Polyadditionsreaktion, insbesondere um eine Polyaddition von Isocyanatgruppen und Aminogruppen.

Unter einem Gel soll ein vernetztes System auf Basis eines Polymers verstanden werden, das in Kontakt mit einer Flüssigkeit (sog. Solvogel oder Lyogel, bzw. mit Wasser als Flüssigkeit: Aquagel oder Hydrogel) vorliegt. Dabei bildet die Polymerphase ein kontinuierliches räumliches Netzwerk.

Im Rahmen von Schritt (b) des erfindungsgemäßen Verfahrens entsteht das Gel üblicherweise durch Ruhenlassen, z.B. durch einfaches Stehenlassen des Behälters, Reaktionsgefäßes oder Reaktors, in dem sich die Mischung befindet (im folgenden Geliervorrichtung genannt). Bevorzugt wird während des Gelierens (Gelbildung) die Mischung nicht mehr gerührt oder durchmischt, weil dies die Ausbildung des Gels behindern könnte. Es hat sich als vorteilhaft erwiesen, die Mischung während des Gelierens abzudecken bzw. die Geliervorrichtung zu verschlie-βen.

Die Gelierung ist dem Fachmann an sich bekannt und wird beispielsweise in der WO-2009/027310 auf Seite 21, Zeile 19 bis Seite 23, Zeile 13 beschrieben, deren Inhalt hiermit in vollem Umfang einbezogen wird.

### Schritt (c)

Erfindungsgemäß wird in Schritt (c) das im vorigen Schritt erhaltene Gel getrocknet.

In einer bevorzugten Ausführungsform erfolgt die Trocknung unter überkritischen Bedingungen, vorzugsweise nach Austausch des Lösungsmittels durch CO₂ oder anderen für Zwecke der überkritischen Trocknung geeigneter Lösungsmittel. Eine derartige Trocknung ist dem Fachmann an sich bekannt. Überkritische Bedingungen kennzeichnen eine Temperatur und einen Druck, bei der die zu entfernende fluide Phase im überkritischen Zustand vorliegt. Hierdurch lässt sich die Schrumpfung des Gelkörpers beim Entfernen des Lösungsmittels reduzieren.

Die überkritische Trocknung des Gels erfolgt vorzugsweise in einem Autoklaven. Dabei ist überkritisches CO₂ besonders bevorzugt, d. h. vorzugsweise erfolgt die Trocknung durch Extraktion des Lösungsmittels mit überkritischem CO₂. Der Autoklav wird vorzugsweise zunächst mit einem organischen Lösungsmittel so gefüllt, so dass das Gel vollständig bedeckt wird, woraufhin der Autoklav verschlossen wird. Dadurch kann verhindert werden, dass Schrumpf des Gels durch Verdampfen des organischen Lösungsmittels auftritt, bevor das Gel in Kontakt mit überkritischem CO₂ kommt.

In einer alternativen Ausführungsform erfolgt das Trocknen des erhaltenen Gels durch Überführung des Lösungsmittels (C) in den gasförmigen Zustand bei einer Temperatur und einem Druck unterhalb der kritischen Temperatur und des kritischen Drucks des Lösungsmittels (C). Demzufolge erfolgt vorzugsweise das Trocknen durch Entfernung des Lösungsmittels (C), das bei der Umsetzung zugegen war, ohne vorherigen Austausch gegen ein weiteres Lösungsmittel.

Entsprechende Methoden sind dem Fachmann ebenfalls bekannt und werden in der WO 2009/027310 auf Seite 26, Zeile 22 bis Seite 28, Zeile 36 beschrieben, deren Inhalt hiermit in vollem Umfang einbezogen wird.

### Eigenschaften der porösen Materialien und Verwendung

Ein weiterer Gegenstand der vorliegenden Erfindung sind die gemäß dem erfindungsgemäßen Verfahren erhältlichen porösen Materialien. Aerogele sind als poröse Materialien im Rahmen der vorliegenden Erfindung bevorzugt, d. h. vorzugsweise ist das erfindungsgemäß erhältliche poröse Material ein Aerogel.

Der mittlere Porendurchmesser wird durch Rasterelektronenmiksokopie und anschließender bildanalytischer Auswertung anhand einer statistisch signifikanten Anzahl an Poren bestimmt. Entsprechende Verfahren sind dem Fachmann bekannt.

Vorzugsweise beträgt der volumengewichtete mittlere Porendurchmesser des porösen Materials höchstens 4 Mikrometer. Besonders bevorzugt beträgt der volumengewichtete mittlere Porendurchmesser des porösen Materials höchstens 3 Mikrometer, ganz besonderes bevorzugt höchstens 2 Mikrometer und insbesondere höchstens 1 Mikrometer.

Zwar ist eine möglichst geringe Porengröße bei hoher Porosität aus Sicht einer geringen thermischen Leitfähigkeit wünschenswert. Herstellungsbedingt und um ein mechanisch ausreichend stabiles poröses Material zu erhalten, ergibt sich jedoch eine praktische untere Grenze des volumengewichteten mittleren Porendurchmessers. Im Allgemeinen beträgt der volumengewichtete mittlere Porendurchmesser mindestens 50nm, vorzugsweise mindestens 100 nm.

Bevorzugt weist das erfindungsgemäß erhältliche poröse Material eine Porosität von mindestens 70 Vol.-%, insbesondere von 70 bis 99 Vol.-%, besonders bevorzugt mindestens 80 Vol.-% auf, ganz besonders bevorzugt mindestens 85 Vol.-%, insbesondere von 85 bis 95 Vol.-%. Die Porosität in Vol.-% bedeutet, dass der genannte Anteil des Gesamtvolumens des porösen Materials aus Poren besteht. Zwar ist aus Sicht einer minimalen Wärmeleitfähigkeit meist eine möglichst hohe Porosität erwünscht, doch ist die Porosität durch die mechanischen Eigenschaften und die Verarbeitbarkeit des porösen Materials nach oben begrenzt.

Die Komponenten (a1) bis (a3) und gegebenenfalls (a4), sofern der Katalysator einbaubar ist, liegen im erfindungsgemäß erhältlichen porösen Material in umgesetzter (polymerer) Form vor. Aufgrund der erfindungsgemäßen Zusammensetzung liegen die Monomerbausteine (a1) und (a2) im porösen Material überwiegend über Harnstoffverknüpfungen und/oder über Isocyanuratverknüpfungen gebunden vor, wobei die Isocyanuratgruppen durch Trimerisierung von Isocyanatgruppen der Monomerbausteine (a1) entstehen. Sofern das poröse Material weitere Komponenten enthält, sind weitere mögliche Verknüpfungen beispielsweise Urethangruppen, welche durch Reaktion von Isocyanatgruppen mit Alkoholen oder Phenolen entstehen.

Die Bestimmung der mol-% der Verknüpfungen der Monomerbausteine im porösen Material erfolgt mittels NMR-Spektroskopie (Kernspinresonanz) im Festkörper oder in gequollenem Zustand. Geeignete Bestimmungsmethoden sind dem Fachmann bekannt.

Die Dichte des erfindungsgemäß erhältlichen porösen Materials beträgt üblicherweise 20 bis 600 g/l, bevorzugt 50 bis 500 g/l und besonders bevorzugt 70 bis 200 g/l.

Das erfindungsgemäße Verfahren ergibt ein zusammenhängendes poröses Material und nicht nur ein Polymerpulver oder -partikel. Dabei wird die räumliche Form des resultierenden porösen Materials durch die Form des Gels bestimmt, die wiederum durch die Form der Geliervorrichtung bestimmt wird. So ergibt beispielsweise ein zylindrischer Gelierbehälter üblicherweise ein annähernd zylinderförmiges Gel, dass dann zu einem porösen Material in Zylinderform getrocknet werden kann.

Die erfindungsgemäß erhältlichen porösen Materialien weisen günstige thermische Eigenschaften einerseits und günstige Materialeigenschaften wie einfache Verarbeitbarkeit und hohe mechanische Stabilität, beispielsweise geringe Brüchigkeit, andererseits auf. Die porösen Materialien haben eine geringe Dichte und weisen zudem eine geringe mittlere Porengröße auf. Die Kombination der vorgenannten Eigenschaften erlaubt die erfindungsgemäße Verwendung als Dämmstoff zur thermischen Islolation, insbesondere für Anwendungen in Vakuumisolationspaneelen und als Baumaterialien, wobei im Bereich der Baumaterialien die gute thermischen Isolationswirkung im belüfteten Zustand besonders vorteilhaft ist.

### Beispiele

Die thermische Leitfähigkeit λ wurde nach DIN EN 12667 mit einem Plattengerät der Firma Hesto (Lambda Control A50) bestimmt.

Es wurden folgende Verbindungen eingesetzt:

### Komponente a1:

Oligomeres MDI (Lupranat® M200) mit einem NCO-Gehalt von 30,9 g pro 100 g nach ASTM D-5155-96 A, einer Funktionalität im Bereich von drei und einer Viskosität von 2100 mPa.s bei 25°C nach DIN 53018 (nachfolgend "Verbindung M200").

### Komponente a2:

3,3',5,5'-Tetraethyl-4,4'-diaminodiphenylmethan (nachfolgend "MDEA")

### Katalysatoren a4:

Triethanolamin, Triethylendiamin (IUPAC: 1,4-Diazabicyclo[2.2.2]octan) und Methyldiethanolamin.

### Beispiel 1

80 g der Verbindung M200 wurden unter Rühren bei 20°C in 220 g 2-Butanon in einem Becherglas gelöst. 4 g der Verbindung MDEA und 12 g Triethanolamin wurden in 220 g 2-Butanon in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und in einem Autoklaven durch Lösungsmittel-Extraktion wie nachstehend beschrieben mit überkritischem CO₂ getrocknet.

Der Gel-Monolith wurde aus dem Becherglas entnommen und in einen 250 ml Autoklaven transferiert. Der Autoklav wurde mit Aceton der Reinheit >99% gefüllt, so dass der Monolith vollständig von Aceton bedeckt war, und anschließend verschlossen. Der Monolith wurde für 24h im CO₂ Strom getrocknet. Der Druck (im Trocknungssystem) betrug zwischen 115 und 120 bar; die Temperatur betrug 40°C. Am Ende wurde der Druck im System innerhalb von ca. 45 Minuten bei einer Temperatur von 40°C kontrolliert auf Atmosphärendruck verringert. Der Autoklav wurde geöffnet und der getrocknete Monolith wurde entnommen.

Das erhaltene poröse Material hatte eine Dichte von 168 g/L. Die Wärmeleitfähigkeit betrug 22,3 mW/m*K bei 10°C.

### Beispiel 2

80 g der Verbindung M200 wurden unter Rühren bei 20°C in 250 g Ethylacetat in einem Becherglas gelöst. 4 g der Verbindung MDEA und 12 g Methyldiethanolamin wurden in 250 g Ethylacetat in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel entsprechend Beispiel 1 aus dem Becherglas genommen und in einem Autoklaven durch Lösungsmittel-Extraktion mit überkritischem CO₂ getrocknet.

Das erhaltene poröse Material hatte eine Dichte von 165 g/L. Die Wärmeleitfähigkeit betrug 20,9 mW/m*K bei 10°C.

### Beispiel 3

80 g der Verbindung M200 wurden unter Rühren bei 20°C in 220 g 2-Butanon in einem Becherglas gelöst. 4 g der Verbindung MDEA und 8 g Triethylendiamin wurden in 220 g 2-Butanon in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel entsprechend Beispiel 1 aus dem Becherglas genommen und in einem Autoklaven durch Lösungsmittel-Extraktion mit überkritischem CO₂ getrocknet.

Das erhaltene poröse Material hatte eine Dichte von 155 g/L. Die Wärmeleitfähigkeit betrug 20,6 mW/m*K bei 10°C.

### Beispiel 4

48 g der Verbindung M200 wurden unter Rühren bei 20°C in 220 g 2-Butanon in einem Becherglas gelöst. 8 g der Verbindung MDEA und 8 g Methyldiethanolamin sowie 1 g Wasser wurden in 220 g 2-Butanon in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel entsprechend Beispiel 1 aus dem Becherglas genommen und in einem Autoklaven durch Lösungsmittel-Extraktion mit überkritischem CO₂ getrocknet.

Das erhaltene poröse Material hatte eine Dichte von 130 g/L. Die Wärmeleitfähigkeit betrug 19,5 mW/m*K bei 10°C.

### Beispiel 5V

80 g der Verbindung M200 wurden unter Rühren bei 20°C in 220 g 2-Butanon in einem Becherglas gelöst. 4 g der Verbindung MDEA und 1 g Triethanolamin wurden in 220 g 2-Butanon in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Das Gel hatte eine breiartige Konsistenz und ließ sich nicht entformen.

### Beispiel 6V

80 g der Verbindung M200 wurden unter Rühren bei 20°C in 220 g 2-Butanon in einem Becherglas gelöst. 4 g der Verbindung MDEA und 3 g Triethanolamin wurden in 220 g 2-Butanon in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Das Gel hatte eine breiartige Konsistenz und ließ sich nicht entformen.

### Beispiele 7V

80 g der Verbindung M200 wurden unter Rühren bei 20°C in 250 g Ethylacetat in einem Becherglas gelöst. 4 g der Verbindung MDEA und 1 g Methyldiethanolamin wurden in 250 g Ethylacetat in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Das Gel hatte eine breiartige Konsistenz und ließ sich nicht entformen.

### Beispiel 8V

80 g der Verbindung M200 wurden unter Rühren bei 20°C in 250 g Ethylacetat in einem Becherglas gelöst. 4 g der Verbindung MDEA und 2 g Methyldiethanolamin wurden in 250 g Ethylacetat in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Das Gel hatte eine breiartige Konsistenz und ließ sich nicht entformen.

### Beispiel 9V

80 g der Verbindung M200 wurden unter Rühren bei 20°C in 220 g 2-Butanon in einem Becherglas gelöst. 4 g der Verbindung MDEA und 1g Triethylendiamin wurden in 220 g 2-Butanon in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Das Gel hatte eine breiartige Konsistenz und ließ sich nicht entformen.

### Beispiel 10V

48 g der Verbindung M200 wurden unter Rühren bei 20°C in 220 g 2-Butanon in einem Becherglas gelöst. 8 g der Verbindung MDEA und 1 g Methyldiethanolamin sowie 1 g Wasser wurden in 220 g 2-Butanon in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Das Gel hatte eine breiartige Konsistenz und ließ sich nicht entformen.

## Patentansprüche

1. Verfahren zur Herstellung eines porösen Materials umfassend die Umsetzung der folgen den Komponenten:
(a1) von 40 bis 92,6 Gew.-% mindestens ein mehrfunktionelles Isocyanat, und
(a2) von 0,1 bis 30 Gew.-% mindestens ein mehrfunktionelles aromatisches Amin gemäß der allgemeinen Formel I 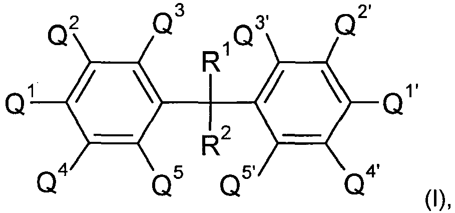 wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist,
(a3) von 0,5 bis 8 Gew.-% Wasser, und
(a4) von 6 bis 30 Gew.-% mindestens eines Katalysators,
jeweils bezogen auf das Gesamtgewicht der Komponenten (a1) bis (a4), wobei sich die Gew.-% der Komponenten (a1) bis (a4) auf 100 Gew.-% addieren, und wobei die Umsetzung in Gegenwart eines Lösungsmittels (C) durchgeführt wird, welches nach der Umsetzung entfernt wird.

2. Verfahren nach Anspruch 1, umfassend die Umsetzung von 35 bis 93,8 Gew.-% der Komponente (a1), von 0,2 bis 25 Gew.-% der Komponente (a2), von 0 bis 10 Gew.-% Wasser, und von 6 bis 30 Gew.-% der Komponente (a4), jeweils bezogen auf das Gesamtgewicht der Komponenten (a1) bis (a4), wobei sich die Gew.-% der Komponenten (a1) bis (a4) auf 100 Gew.-% addieren.

3. Verfahren nach Anspruch 1 oder 2, wobei mindestens 5 und höchstens 20 Gew.-% der Komponente (a2) bezogen auf das Gesamtgewicht der Komponenten (a1) bis (a4) eingesetzt werden.

4. Verfahren nach Anspruch 1 oder 2, umfassend die Umsetzung von 52 bis 92,5 Gew.-% der Komponente (a1), von 0,5 bis 18 Gew.-% der Komponente (a2), von 0 bis 6 Gew.-% Wasser, und von 7 bis 24 Gew.-% der Komponente (a4), jeweils bezogen auf das Gesamtgewicht der Komponenten (a1) bis (a4), wobei sich die Gew.-% der Komponenten (a1) bis (a4) auf 100 Gew.-% addieren.

5. Verfahren nach einem oder mehreren der Ansprüche 1 bis 4, wobei Q², Q⁴, Q^{2'} und Q^{4'} so gewählt werden, dass das aromatische Amin (a2) gemäß der allgemeinen Formel I mindestens zwei primäre Aminogruppen umfasst, die jeweils eine lineare oder verzweigte Alkylgruppe, die weitere funktionelle Gruppen tragen kann, mit von 1 bis 12 Kohlenstoffatomen in a-Position zu mindestens einer an den aromatischen Kern gebundenen primären Aminogruppe aufweisen.

6. Verfahren nach einem oder mehreren der Ansprüche 1 bis 5, wobei die Aminkomponente (a2) mindestens eine Verbindung umfasst, die aus der Gruppe bestehend aus 3,3',5,5'-Tetraalkyl-4,4'-diaminodiphenylmethan, 3,3',5,5'-Tetraalkyl-2,2'-diaminodiphenylmethan und 3,3',5,5'-Tetraalkyl-2,4'-diaminodiphenylmethan ausgewählt wird, wobei die Alkylgruppen in 3,3',5 und 5'-Position gleich oder unterschiedlich sein können und unabhängig voneinander ausgewählt werden aus linearen oder verzweigten Alkylgruppen mit von 1 bis 12 Kohlenstoffatomen, wobei die Alkylgruppen weitere funktionelle Gruppen tragen können.

7. Verfahren nach einem oder mehreren der Ansprüche 1 bis 6, wobei die Alkylgruppen der mehrfunktionellen aromatischen Amine (a2) gemäß der allgemeinen Formel I ausgewählt werden aus Methyl, Ethyl, n-Propyl, iso-Propyl, n-Butyl, sek-Butyl und tert-Butyl.

8. Verfahren nach einem oder mehreren der Ansprüche 1 bis 7, wobei die mehrfunktionellen aromatischen Amine (a2) gemäß der allgemeinen Formel I 3,3',5,5'-Tetraalkyl-4,4'-diaminodiphenylmethane sind, vorzugsweise 3,3',5,5'-Tetraethyl-4,4'-diaminodiphenylmethan und/oder 3,3',5,5'-Tetramethyl-4,4'-diaminodiphenylmethan.

9. Verfahren nach einem oder mehreren der Ansprüche 1 bis 8, wobei Komponente (a4) ausgewählt wird aus der Gruppe bestehend aus primären, sekundären und tertiären Aminen, Triazinderivaten, Organometallverbindungen, Metallchelaten, Oxide der Phospholene, quaternäre Ammoniumsalzen, Ammoniumhydroxide sowie Alkali und ErdalkaliHydroxide, -alkoxide und -carboxylate.

10. Verfahren nach einem oder mehreren der Ansprüche 1 bis 9, wobei Komponente (a4) ausgewählt wird aus der Gruppe bestehend aus Dimethylcyclohexylamin, Bis(2-dimethylaminoethyl)ether, N,N,N,N,N-Pentamethyldiethylentriamin, Methylimidazol, Dimethylimidazol, Aminopropylimidazol, Dimethylbenzylamin, 1,6-Diazabicyclo-5,4,0-undecen-7, Tris-dimethylaminopropylhexahydrotriazin, Triethylamin, Tris-(dimethylaminomethyl)phenol, Triethylendiamin (Diazabicyclo[2,2,2]octan), Dimethylaminoethanolamin, Dimethylaminopropylamin, N,N-Dimethylaminoethoxyethanol, N,N,N-Trimethylaminoethylethanolamin, Triethanolamin, Diethanolamin, Triisopropanolamin, Diisopropanolamin, Methyldiethanolamin, Butyldiethanolamin, Metall-Acetylacetonate, Ammonium-Ethylhexanoate und Metallionen-Ethylhexanoate.

11. Verfahren nach einem oder mehreren der Ansprüche 1 bis 8, wobei Komponente (a4) ausgewählt wird aus der Gruppe bestehend aus Alkalimetallcarboxylaten, Erdalkalimetallcarboxylaten und Ammoniumcarboxylaten.

12. Verfahren nach einem oder mehreren der Ansprüche 1 bis 11, wobei Komponente (a4) Kalium-2-ethylhexanoat umfasst.

13. Verfahren nach einem oder mehreren der Ansprüche 1 bis 12, wobei kein Wasser verwendet wird.

14. Verfahren nach einem oder mehreren der Ansprüche 1 bis 12, wobei mindestens 0,1 Gew.-% Wasser zugegeben wird.

15. Verfahren nach einem oder mehreren der Ansprüche 1 bis 14, umfassend:
(a) Bereitstellen der Komponenten (a1), (a2), (a4) und gegebenenfalls (a3) sowie des Lösungsmittels (C) wie in den Ansprüchen 1 bis 11 definiert,
(b) Umsetzung der Komponenten (a1) bis (a4) in Gegenwart des Lösungsmittels (C) zu einem Gel, und
(c) Trocknen des im vorigen Schritt erhaltenen Gels.

16. Verfahren nach Anspruch 15, wobei die Komponenten (a1) einerseits und (a2) bis (a4) andererseits getrennt voneinander jeweils in einer Teilmenge des Lösungsmittels (C) bereitgestellt werden.

17. Verfahren nach einem der Ansprüche 15 oder 16, wobei das Trocknen des erhaltenen Gels durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit erfolgt.

18. Verfahren nach einem der Ansprüche 15 oder 16, wobei das Trocknen des erhaltenen Gels unter überkritischen Bedingungen erfolgt.

19. Poröses Material erhältlich gemäß dem Verfahren nach einem oder mehreren der Ansprüche 1 bis 18.

20. Verwendung von porösen Materialien gemäß Anspruch 19 als Dämmstoff oder für Vakuumisolationspaneele.

## Claims

1. A process for producing a porous material, which comprises reacting the following components:
(a1) from 40 to 92.6% by weight of at least one polyfunctional isocyanate, and
(a2) from 0.1 to 30% by weight of at least one polyfunctional aromatic amine having the general formula I 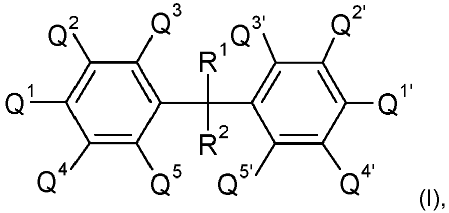 where R¹ and R² can be identical or different and are each selected independently from among hydrogen and linear or branched alkyl groups having from 1 to 6 carbon atoms and where all substituents Q¹ to Q⁵ and Q^{1'} to Q^{5'} are identical or different and are each selected independently from among hydrogen, a primary amino group and a linear or branched alkyl group having from 1 to 12 carbon atoms, where the alkyl group can bear further functional groups, with the proviso that the compound having the general formula I comprises at least two primary amino groups, where at least one of Q¹, Q³ and Q⁵ is a primary amino group and at least one of Q^{1'}, Q^{3'} and Q^{5'} is a primary amino group,
(a3)from 0.5 to 8% by weight of water, and
(a4)from 6 to 30% by weight of at least one catalyst,
in each case based on the total weight of the components (a1) to (a4),
where the % by weight of the components (a1) to (a4) add up to 100% by weight, and where the reaction is carried out in the presence of a solvent (C) which is removed after the reaction.

2. The process according to claim 1 which comprises reacting from 35 to 93.8% by weight of component (a1), from 0.2 to 25% by weight of component (a2), from 0 to 10% by weight of water and from 6 to 30% by weight of component (a4), in each case based on the total weight of the components (a1) to (a4), where the % by weight of the components (a1) to (a4) add up to 100% by weight.

3. The process according to claim 1 or 2, wherein at least 5 and at the most 20% by weight of component (a2) are used, based on the total weight of the components (a1) to (a4).

4. The process according to claim 1 or 2 which comprises reacting from 52 to 92.5% by weight of component (a1), from 0.5 to 18% by weight of component (a2), from 0 to 6% by weight of water and from 7 to 24% by weight of component (a4), in each case based on the total weight of the components (a1) to (a4), where the % by weight of the components (a1) to (a4) add up to 100% by weight.

5. The process according to one or more of claims 1 to 4, wherein Q², Q⁴, Q^{2'} and Q^{4'} are selected so that the aromatic amine (a2) having the general formula I comprises at least two primary amino groups which each have a linear or branched alkyl group which can bear further functional groups, having from 1 to 12 carbon atoms, in the α position relative to at least one primary amino group bound to the aromatic ring.

6. The process according to one or more of claims 1 to 5, wherein the amine component (a2) comprises at least one compound selected from the group consisting of 3,3',5,5'-tetraalkyl-4,4'-diaminodiphenylmethane, 3,3',5,5'-tetraalkyl-2,2'-diaminodiphenylmethane and 3,3',5,5'-tetraalkyl-2,4'-diaminodiphenylmethane, where the alkyl groups in the 3,3',5 and 5' positions can be identical or different and are selected independently from among linear or branched alkyl groups which have from 1 to 12 carbon atoms and can bear further functional groups.

7. The process according to one or more of claims 1 to 6, wherein the alkyl groups of the polyfunctional aromatic amines (a2) having the general formula I are selected from among methyl, ethyl, n-propyl, isopropyl, n-butyl, sec-butyl and tert-butyl.

8. The process according to one or more of claims 1 to 7, wherein the polyfunctional aromatic amines (a2) having the general formula I are 3,3',5,5'-tetraalkyl-4,4'-diaminodiphenylmethanes, preferably 3,3',5,5'-tetraethyl-4,4'-diaminodiphenylmethane and/or 3,3',5,5'-tetramethyl-4,4'-diaminodiphenylmethane.

9. The process according to one or more of claims 1 to 8, wherein component (a4) is selected from the group consisting of primary, secondary and tertiary amines, triazine derivatives, metal-organic compounds, metal chelates, oxides of phospholenes, quaternary ammonium salts, ammonium hydroxides and alkali metal and alkaline earth metal hydroxides, alkoxides and carboxylates.

10. The process according to one or more of claims 1 to 9,wherein component (a4) is selected from the group consisting of dimethylcyclohexylamine, bis(2-dimethylaminoethyl) ether, N,N,N,N,N-pentamethyldiethylenetriamine, methylimidazole, dimethylimidazole, aminopropylimidazole, dimethylbenzylamine, 1,6-diazabicyclo[5.4.0]undec-7-ene, trisdimethylaminopropylhexahydrotriazine, triethylamine, tris(dimethylaminomethyl)phenol, triethylenediamine (diazabicyclo[2.2.2]octane), dimethylaminoethanolamine, dimethylaminopropylamine, N,N-dimethylaminoethoxyethanol, N,N,N-trimethylaminoethylethanolamine, triethanolamine, diethanolamine, triisopropanolamine, diisopropanolamine, methyldiethanolamine, butyldiethanolamine, metal acetylacetonates, ammonium ethylhexanoates and metal ethylhexanoates.

11. The process according to one or more of claims 1 to 8, wherein component (a4) is selected from the group consisting of alkali metal carboxylates, alkaline earth metal carboxylates and ammonium carboxylates.

12. The process according to one or more of claims 1 to 11, wherein component (a4) comprises potassium 2-ethylhexanoate.

13. The process according to one or more of claims 1 to 12, wherein no water is used.

14. The process according to one or more of claims 1 to 12, wherein at least 0.1% by weight of water is added.

15. The process according to one or more of claims 1 to 14, which comprises:
(a) provision of the components (a1), (a2), (a4) and optionally (a3) and the solvent (C) defined in claims 1 to 11,
(b) reaction of the components (a1) to (a4) in the presence of the solvent (C) to form a gel and
(c) drying of the gel obtained in the preceding step.

16. The process according to claim 15, wherein the components (a1) on the one hand and (a2) to (a4) on the other hand are provided separately, in each case in a partial amount of the solvent (C).

17. The process according to either claim 15 or 16, wherein the drying of the gel obtained is carried out by converting the liquid comprised in the gel into the gaseous state at a temperature and a pressure below the critical temperature and the critical pressure of the liquid comprised in the gel.

18. The process according to either claim 15 or 16, wherein the drying of the gel obtained is carried out under supercritical conditions.

19. A porous material which can be obtained by the process according to one or more of claims 1 to 18.

20. The use of porous materials according to claim 19 as insulation material or for vacuum insulation panels.

## Revendications

1. Procédé pour la préparation d'un matériau poreux comprenant la transformation des composants suivants :
(a1) de 40 à 92,6 % en poids d'au moins un isocyanate polyfonctionnel, et
(a2) de 0,1 à 30 % en poids d'au moins une amine aromatique polyfonctionnelle selon la formule générale I 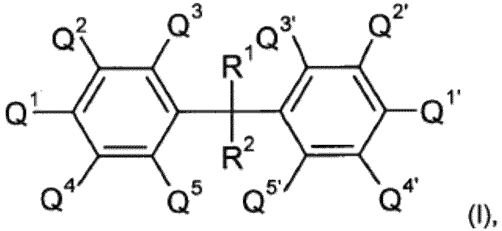 R¹ et R² pouvant être identiques ou différents et étant choisis indépendamment l'un de l'autre parmi hydrogène et des groupes alkyle linéaires ou ramifiés comportant de 1 à 6 atomes de carbone et tous les substituants Q¹ à Q⁵ et Q^{1'} à Q^{5'} étant identiques ou différents et étant choisis indépendamment les uns des autres parmi hydrogène, un groupe amino primaire et un groupe alkyle linéaire ou ramifié comportant de 1 à 12 atomes de carbone, le groupe alkyle pouvant porter des groupes fonctionnels supplémentaires, à la condition que le composé selon la formule générale I comprend au moins deux groupes amino primaire, au moins l'un parmi Q¹, Q³ et Q⁵ étant un groupe amino primaire et au moins l'un parmi Q^{1'}, Q^{3'} et Q^{5'} étant un groupe amino primaire,
(a3) de 0,5 à 8 % en poids d'eau, et
(a4) de 6 à 30 % en poids d'au moins un catalyseur,
à chaque fois par rapport au poids total des composants (a1) à (a4), les % en poids des composants (a1) à (a4) s'additionnant à 100 % en poids, et la transformation étant mise en œuvre en présence d'un solvant (C), qui est éliminé après la transformation.

2. Procédé selon la revendication 1, comprenant la transformation de 35 à 93,8 % en poids du composant (a1), de 0,2 à 25 % en poids du composant (a2), de 0 à 10 % en poids d'eau, et de 6 à 30 % en poids du composant (a4), à chaque fois par rapport au poids total des composants (a1) à (a4), les % en poids des composants (a1) à (a4) s'additionnant à 100 % en poids.

3. Procédé selon la revendication 1 ou 2, au moins 5 et au plus 20 % en poids du composant (a2), par rapport au poids total des composants (a1) à (a4), étant utilisés.

4. Procédé selon la revendication 1 ou 2, comprenant la transformation de 52 à 92,5 % en poids du composant (a1), de 0,5 à 18 % en poids du composant (a2), de 0 à 6 % en poids d'eau, et de 7 à 24 % en poids du composant (a4), à chaque fois par rapport au poids total des composants (a1) à (a4), les % en poids des composants (a1) à (a4) s'additionnant à 100 % en poids.

5. Procédé selon l'une ou plusieurs des revendications 1 à 4, Q², Q⁴, Q^{2'} et Q^{4'} étant choisis de telle manière que l'amine aromatique (a2) selon la formule générale I comprend au moins deux groupes amino primaire, qui présentent à chaque fois un groupe alkyle linéaire ou ramifié, qui peut porter des groupes fonctionnels supplémentaires, comportant de 1 à 12 atomes de carbone en position α par rapport à au moins un groupe amino primaire lié au noyau aromatique.

6. Procédé selon l'une ou plusieurs des revendications 1 à 5, le composant de type amine (a2) comprenant au moins un composé qui est choisi dans le groupe constitué par un 3,3',5,5'-tétraalkyl-4,4'-diaminodiphénylméthane, un 3,3',5,5'-tétraalkyl-2,2'-diaminodiphénylméthane et un 3,3',5,5'-tétraalkyl-2,4'-diaminodiphénylméthane, les groupes alkyle en position 3, 3', 5 et 5' pouvant être identiques ou différents et étant choisis indépendamment les uns des autres parmi des groupes alkyle linéaires ou ramifiés comportant de 1 à 12 atomes de carbone, les groupes alkyle pouvant porter des groupes fonctionnels supplémentaires.

7. Procédé selon l'une ou plusieurs des revendications 1 à 6, les groupes alkyle des amines aromatiques polyfonctionnelles (a2) selon la formule générale I étant choisis parmi méthyle, éthyle, n-propyle, iso-propyle, n-butyle, sec-butyle et tert-butyle.

8. Procédé selon l'une ou plusieurs des revendications 1 à 7, les amines aromatiques polyfonctionnelles (a2) selon la formule I étant des 3,3',5,5'-tétraalkyl-4,4'-diaminodiphénylméthanes, de préférence le 3,3',5,5'-tétraéthyl-4,4'-diaminodiphénylméthane et/ou le 3,3',5,5'-tétraméthyl-4,4'-diaminodiphénylméthane.

9. Procédé selon l'une ou plusieurs des revendications 1 à 8, le composant (a4) étant choisi dans le groupe constitué par des amines primaires, des amines secondaires et des amines tertiaires, des dérivés de triazine, des composés organométalliques, des chélates de métal, des oxydes de phospholènes, des sels d'ammonium quaternaire, des hydroxydes d'ammonium ainsi que des hydroxydes, des alcoxydes et des carboxylates alcalins et alcalino-terreux.

10. Procédé selon l'une ou plusieurs des revendications 1 à 9, le composant (a4) étant choisi dans le groupe constitué par la diméthylcyclohexylamine, le bis(2-diméthylaminoéthyl)éther, la N,N,N,N,N-pentaméthyldiéthylènetriamine, le méthylimidazole, le dimethylimidazole, l'aminopropylimidazole, la diméthylbenzylamine, le 1,8-diazabicyclo-[5.4.0]-undéc-7-ène, la tris-diméthylaminopropylhexahydrotriazine, la triéthylamine, le tris-(diméthylaminométhyl)phénol, la triéthylènediamine (diazabicyclo[2.2.2]octane), la diméthylaminoéthanolamine, la diméthylaminopropylamine, le N,N-diméthylaminoéthoxyéthanol, la N,N,N-triméthylaminoéthyléthanolamine, la triéthanolamine, la diéthanolamine, la triisopropanolamine, la diisopropanolamine, la méthyldiéthanolamine, la butyldiéthanolamine, un acétylacétonate de métal, l'éthylhexanoate d'ammonium et des éthylhexanoates d'ions métalliques.

11. Procédé selon l'une ou plusieurs des revendications 1 à 8, le composant (a4) étant choisi dans le groupe constitué par des carboxylates de métal alcalin, des carboxylates de métal alcalino-terreux et des carboxylates d'ammonium.

12. Procédé selon l'une ou plusieurs des revendications 1 à 11, le composant (a4) comprenant le 2-éthylhexanoate de potassium.

13. Procédé selon l'une ou plusieurs des revendications 1 à 12, de l'eau n'étant pas utilisée.

14. Procédé selon l'une ou plusieurs des revendications 1 à 12, au moins 0,1 % en poids d'eau étant ajouté.

15. Procédé selon l'une ou plusieurs des revendications 1 à 14, comprenant :
(a) la mise à disposition des composants (a1), (a2), (a4) et éventuellement (a3) ainsi que du solvant (C) comme défini dans les revendications 1 à 11,
(b) transformation des composants (a1) à (a4) en présence du solvant (C) en un gel, et
(c) séchage du gel obtenu dans l'étape précédente.

16. Procédé selon la revendication 15, les composants (a1) d'une part et (a2) à (a4) d'autre part, de manière séparée les uns des autres, étant mis à disposition à chaque fois dans une quantité partielle du solvant (C).

17. Procédé selon la revendication 15 ou 16, le séchage du gel obtenu étant réalisé par conversion du liquide, contenu dans le gel, à l'état gazeux à une température et une pression inférieures à la température critique et à la pression critique du liquide contenu dans le gel.

18. Procédé selon la revendication 15 ou 16, le séchage du gel obtenu étant réalisé dans des conditions supercritiques.

19. Matériau poreux pouvant être obtenu par le procédé selon l'une ou plusieurs des revendications 1 à 18.

20. Utilisation de matériaux poreux selon la revendication 19 en tant que matière isolante ou pour des panneaux d'isolation sous vide.
